# EUROPEAN PATENT APPLICATION

(11) **EP 4 782 259 A1**
(43) Date of publication of application: **29.07.2026**
(21) Application number: 25223952.0
(22) Date of filing: 16.12.2025
(51) Int. Cl.: B60L 53/35, B60L 53/53, B60L 53/57, B60L 53/67, B60L 53/68, B60L 53/80, B60L 58/12

(54) **METHODS AND SYSTEMS FOR CHARGING VEHICLE BATTERY**

(30) Priority: 24.01.2025 FI 20255050
(71) Applicant: Unikie Oy, 33720 Tampere (FI)
(72) Inventor: Sormunen, Toni, 33880 Lempäälä (FI); Kiviranta, Vesa, 33400 Tampere (FI); Salo, Jouni, 00200 Helsinki (FI)
(74) Representative: Moosedog Oy

(57) **Abstract**

Information pertaining to parking areas (112a-c) and mobile remote-controlled battery charging device(s) (MRCBCDs) (114a-e), is received at a user device (108, 204). The MRCBCDs is/are available to be employed for charging a battery (102) of a vehicle (104), and is/are controlled using control unit (110, 206). Selection of given MRCBCD (114c) is detected at user device. The given MRCBCD is selected to be employed for charging the battery of the vehicle. A first communication link is established between user device and a given control unit (110). A second communication link is established between the given control unit and the given MRCBCD. A digital twin of a real-world environment (100) and information pertaining to current location of given MRCBCD and a location of a given parking area (112b), are determined. The given MRCBCD is navigated from its current location to a location of given parking area, based on routing information.

## Description

### TECHNICAL FIELD

The present disclosure relates to methods for charging batteries of vehicles. Moreover, the present disclosure relates to systems for charging batteries of vehicles.

### BACKGROUND

Nowadays, electric vehicles (EVs) and remote-driving vehicles are widely used in various fields. These vehicles usually operate using a battery. Typically, charging the battery of such vehicles takes place at a charging station, that is permanently installed in a specific location, for example, such as in a parking lot of a shopping center, residential areas, and similar. When a battery of a vehicle needs to be charged, i.e., when the battery of the vehicle is sufficiently discharged, the vehicle is driven to the charging station near a charging plug, so that the charging plug can be attached to a charging port of said vehicle. The charging of the vehicle is done prior to a journey, to ensure the vehicle remains charged throughout the journey.

However, the existing approaches for charging the battery of the vehicle has certain challenges associated therewith. Firstly, although numerous charging stations are permanently installed in specific locations for charging the vehicle, these charging stations may be often occupied by other vehicles. As a result, a user (namely, a driver) may experience delays and is frequently required to wait in queues, leading to inefficiencies and significant time consumption. Secondly, a location of the charging station should be always known to the user beforehand, such that upon discharge of the battery, the user can go to an identified location. However, if the charging location is not nearby to an operational area of the vehicle, then the vehicle may stop during its operation. This results in time-consuming efforts to locate a nearby charging station, which adds to operational inefficiencies and affects overall usability of the vehicle. Thirdly, installation of fixed charging stations can be difficult to arrange in parking areas due to space constraints. These limitations may make it difficult for larger vehicles to park and access charging points, thereby restricting an effectiveness of charging infrastructure and reducing its overall capacity to serve a diverse range of the larger vehicles. Fourthly, communication between a battery charger and the user is often poor, which can result in difficulties in correctly aligning a charging connector with the charging port of the vehicle and ensuring proper charging. Such an inefficiency may lead to delays in initiating the charging process, causing an unnecessary time expenditure for the user and potentially affecting an overall charging experience.

Therefore, in light of the foregoing discussion, there exists a need to overcome the aforementioned drawbacks.

### SUMMARY

The aim of the present disclosure is to provide a system and a method for charging a battery of a vehicle by way of utilising a mobile remote-controlled battery charging device, thereby allowing a reliable, convenient, and user-friendly, and simple charging process for vehicles in various environments. The aim of the present disclosure is achieved by a system and a method for charging a battery of a vehicle, as defined in the appended independent claims to which reference is made. Advantageous features are set out in the appended dependent claims.

The embodiments of the present disclosure substantially enable to improve the flexibility and efficiency of vehicle battery charging by eliminating the reliance on fixed charging stations. By employing mobile remote-controlled battery charging devices, the disclosed system reduces waiting times, mitigates space constraints, and ensures compatibility with various types of vehicles, including larger ones. Furthermore, the embodiments address challenges related to communication and alignment between the user and the charging device, enabling seamless interaction and accurate positioning during the charging process.

Additional aspects, advantages, features, and objects of the present disclosure would be made apparent from the drawings and the detailed description of the illustrative embodiments constructed in conjunction with the appended claims that follow.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a real-world environment where a system for charging a battery of a vehicle is used, in accordance with an embodiment of the present disclosure;
FIG. 2 illustrates a block diagram of an architecture of a system for charging a battery of a vehicle, in accordance with an embodiment of the present disclosure; and
FIG. 3 illustrates steps of a method for charging a battery of a vehicle, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides method for charging a battery of a vehicle, wherein the method comprises:
receiving, at a user device, information pertaining to a plurality of parking areas present in a real-world environment and one or more mobile remote-controlled battery charging devices associated with each of the plurality of parking areas, wherein the one or more mobile remote-controlled battery charging devices are available to be employed for charging the battery of the vehicle, and are controlled using at least one control unit;
detecting, at the user device, a first input indicative of a selection of a given mobile remote-controlled battery charging device associated with a given parking area, wherein the given mobile remote-controlled battery charging device is selected to be employed for charging the battery of the vehicle, and is to be controlled by a given control unit;
establishing, using the user device, a first communication link between the user device and the given control unit, based on the first input;
establishing, using the given control unit, a second communication link between the given control unit and the given mobile remote-controlled battery charging device;
processing, at the given control unit, tracking data collected by a plurality of sensors, to determine a digital twin of the real-world environment and information pertaining to a current location of the given mobile remote-controlled battery charging device in the real-world environment and a location of the given parking area where the given mobile remote-controlled battery charging device is to be navigated;
determining routing information, based on the digital twin of the real-world environment and the information pertaining to the current location of the given mobile remote-controlled battery charging device and the location of the given parking area; and
navigating, using the given control unit, the given mobile remote-controlled battery charging device from its current location to the location of the given parking area, based on the routing information.

In a second aspect, the present disclosure provides a system for charging a battery of a vehicle, wherein the system comprises:
a plurality of sensors arranged in a real-world environment in which the vehicle is present;
a user device; and
at least one control unit,
wherein the user device is configured to:
   receive information pertaining to a plurality of parking areas present in the real-world environment and one or more mobile remote-controlled battery charging devices associated with each of the plurality of parking areas, wherein the one or more mobile remote-controlled battery charging devices are available to be employed for charging the battery of the vehicle, and are controlled using the at least one control unit;
   detect a first input indicative of a selection of a given mobile remote-controlled battery charging device associated with a given parking area, wherein the given mobile remote-controlled battery charging device is selected to be employed for charging the battery of the vehicle, and is to be controlled by a given control unit from amongst the at least one control unit; and
   establish a first communication link with the given control unit, based on the first input, and
wherein the given control unit is configured to:
   establish a second communication link with the given mobile remote-controlled battery charging device;
   process tracking data collected by the plurality of sensors to determine a digital twin of the real-world environment and information pertaining to a current location of the given mobile remote-controlled battery charging device in the real-world environment and a location of the given parking area where the given mobile remote-controlled battery charging device is to be navigated;
   determine routing information, based on the digital twin of the real-world environment and the information pertaining to the current location of the given mobile remote-controlled battery charging device and the location of the given parking area; and
   navigate the given mobile remote-controlled battery charging device from its current location to the location of the given parking area, based on the routing information.

The present disclosure provides the aforementioned method and the aforementioned system which facilitates an efficient, simple yet accurate and user-friendly approach for charging the battery of the vehicle by utilizing the one or more remote-controlled battery charging devices. The method enables in accessing real-time information about an availability of the one or more remote-controlled battery charging devices associated with the plurality of parking areas, allowing the user to select a suitable charging device based on his/her location and/or preferences. By establishing seamless communication between the user device, the at least one control unit, and the one or more remote-controlled battery charging devices, the method enables an efficient coordination of operations. Beneficially, an integration of the tracking data and a creation of the digital twin of the real-world environment enables for precise routing and navigation of the one or more remote-controlled battery charging devices to the location of the plurality of parking areas. In this regard, the one or more remote-controlled battery charging devices can autonomously navigate to the location of the plurality of parking areas based on data collected by the plurality of sensors and pre-determined routes, which streamlines charging process and saving time for the user. This reduces a need for the vehicle to be driven to a fixed charging station (as in case of the prior art), thereby minimizing downtime, and optimizing resource allocation. Additionally, the method and the system are susceptible to dynamically adapt to changes in the real-world environment, ensuring a reliable and flexible charging experience. Moreover, the system provides the user with an ability to manually control the charging process, if needed. This feature offers additional flexibility and control, ensuring that the user can initiate and manage the charging operation according to their preferences and circumstances. The system offers a robust infrastructure for implementing the method by integrating the plurality of sensors, the user device, and the at least one control unit. The modular architecture of the system enables scalability and adaptability, making it suitable for diverse operational environments for example, such as urban parking lots, industrial areas, residential complexes, and the like. It will be appreciated that replacing fixed charging stations with the one or more mobile remote-controlled battery charging devices, the system addresses space constraints and allows larger vehicles to access charging facilities without logistical challenges. The method and the system are fast, robust, easy to implement, and facilitates reliable communication and coordination between the user device, the at least one control unit, and the one or more mobile remote-controlled battery charging devices, thereby ensuring an efficient and seamless charging for the battery of the vehicle.

The term *"battery"* refers to an energy storage device used to supply an electrical power to the vehicle. Examples of the battery may include, but are not limited to, a lithium-ion, a nickel-metal hydride, and a solid-state battery, which are commonly used in electric vehicles and hybrid electric vehicles. The term *"vehicle"* refers to a mode of transportation equipped with the battery, that is designed for mobility in the real-world environment. For example, an electric car, an electric bus, an electric motorbike, a near-electric vehicle, and a hybrid vehicle, and the like.

Throughout the present disclosure, the term *"user device"* refers to a portable electronic device that enables the user to interact with a charging system for the battery of the vehicle. For example, a smartphone, a computer, a laptop, a tablet, a phablet, or similar. Optionally, the user device is provided with an interactive user interface for enabling the user to at least view said information. Such an interactive user interface can be rendered on a display of the user device.

The term *"parking area"* refers to an area where a user of the vehicle can park the vehicle. Pursuant to embodiments of the present disclosure, the parking area can be utilised as a vehicle battery charging location where a user of the vehicle can park the vehicle whose battery needs to be charged. The parking areas can be implemented as parking areas available for parking the vehicle as well as charging the vehicles. Each of the parking area is associated with the one or more mobile remote-controlled battery charging devices in the real-world environment (for example, a restricted area, a port, a warehouse, a construction site, a logistic yard, a depot, a factory, or similar).

The term *"mobile remote-controlled battery charging device"* refers to a transportable, an autonomous unit equipped with necessary components to charge the battery of the vehicle. Notably, a given mobile remote-controlled battery charging device functions similar to a (battery) charging station. The one or more mobile remote-controlled battery charging devices are remotely controlled via the at least one control unit and is capable of navigating through the real-world environment to the location of the plurality of parking areas for charging the battery of the vehicle. The one or more mobile remote-controlled battery charging devices can be positioned in a proximity to the location of the plurality of parking areas to facilitate charging, eliminating a need for the vehicle to be driven to a fixed charging station (unlike the prior art). In other words, it can be understood that a location of the vehicle may be equal to the location of the given parking area (i.e., a user of the vehicle navigates his/her vehicle to the given parking area for charging the battery of the vehicle). The one or more mobile remote-controlled battery charging devices comprises connectors, power management systems, and sensors to monitor and ensure an efficient charging for the battery of the vehicle. In some implementations, a given mobile remote-controlled battery charging device comprises a support structure (namely, a platform having wheels) that is capable of a translation motion (and additionally, optionally, a two-dimensional (2D) rotational motion). Such a support structure can be navigated to any location in the real-world environment. Moreover, in some implementations, when a user selects the given mobile remote-controlled battery charging device, said device can be navigated to a location of the vehicle (i.e., in a case when the vehicle may be away from the given parking area and the battery of said vehicle gets fully discharged, which means that said vehicle may not be able to reach the given parking area for charging the battery). In such a case, the given control unit being communicably coupled to the plurality of sensors may determine the location of said vehicle and navigates the given mobile remote-controlled battery charging device to the location of said vehicle for charging the battery. It will be appreciated that this feature ensures an uninterrupted operation of the vehicle by providing an adaptive solution for charging the battery of the vehicle, even in scenarios where the vehicle cannot access the given parking area.

The term *"control unit"* refers to a central processing device that manages and coordinates operations of the one or more mobile remote-controlled battery charging devices in the real-world environment. In some implementations, the at least one control unit comprises a given control unit. Notably, the at least one control unit comprises at least one processor. Moreover, in an implementation, if three mobile remote-controlled battery charging devices may be associated with a first parking area, a first mobile remote-controlled battery charging device may be controlled by a first control unit, a second mobile remote-controlled battery charging device may be controlled by a second control unit, and a third mobile remote-controlled battery charging device may be controlled by a third control unit. Alternatively, optionally, an entirety of the one or more mobile remote-controlled battery charging devices may be independently controlled by a single control unit (namely, a centralized control unit). This flexibility in control mechanisms ensures that an operation of the one or more mobile remote-controlled battery charging devices associated with the plurality of parking areas can be managed efficiently, either through the centralized control unit or through individual control units, depending on configuration and operational requirements of the system.

Herein, the user device receives information about the availability and status (i.e., either occupied or available) of the plurality of parking areas and the one or more mobile remote-controlled battery charging devices that are associated with those areas. This information may include locations of the plurality of parking areas available in the real-world environment where vehicles can park for charging the battery, the status of each parking area and details on which the one or more mobile remote-controlled battery charging devices are linked to each parking area. This information also encompass operational status of the one or more mobile remote-controlled battery charging devices, for example, such as whether the one or more mobile remote-controlled battery charging devices are available, in use, or under maintenance. Herein, the availability of the one or more mobile remote-controlled battery charging devices are determined by the at least one control unit, which manages and coordinates these devices. The user device then enables the user to select an available remote-controlled battery charging device to charge the battery of the vehicle, based on the information received. The at least one control unit then manages an operation of the remote-controlled battery charging device which is being selected by the user and directs it to the vehicle for charging. Moreover, it is to be assumed that each parking area amongst the plurality of parking areas may be always available for use (i.e., if a first parking area is occupied, a user of the vehicle may select a second parking area for charging the battery of said vehicle). In other words, the one or more mobile remote-controlled battery charging devices are always available for charging the battery of the vehicle. This dynamic allocation of the plurality of parking areas and the availability of the one or more mobile remote-controlled battery charging devices ensures that the charging process remains uninterrupted, thereby optimizing efficiency and reducing waiting times for the user requiring charging of the battery for his/her vehicle. It will be appreciated that real-time availability and status information received by the user device ensures efficient decision-making by the user, allowing the user to quickly identify and select an available charging device without unnecessary delays. This enhances the user experience and reduces a time for searching a charging station. It will also be appreciated that integration of operational status data, such as maintenance information, helps the user to avoid selecting a mobile remote-controlled battery charging device that may be non-functional, thereby ensuring that charging process proceeds smoothly and reliably.

Optionally, the information pertaining to the plurality of parking areas and the one or more mobile remote-controlled battery charging devices is received, at the user device, from a data storage. In this regard, the term *"data storage"* refers to a data repository that comprises information about the plurality of parking areas and the one or more mobile remote-controlled battery charging devices, including their locations, availability status, and other relevant operational data. This data storage may be implemented in various forms, for example, such as a cloud-based storage system, a local database, a distributed storage network, and similar. Herein, the data storage is designed to ensure that the information is accessible to the user device and can be retrieved efficiently to facilitate the charging process. The data storage enables centralized management of data, ensuring that most current and an accurate information is available for decision-making.

Herein, the user device retrieves this information via a network connection, for example, such as an internet, cellular networks, wireless fidelity (Wi-Fi), and similar, from the data storage. Once the information is fetched, the user device can display it to the user through an interactive user interface, allowing the user to make informed decisions about where and which mobile remote-controlled battery charging device to use. Moreover, the data storage may be dynamically updated by the at least one control unit to ensure that the user device receives latest information, reflecting real-time availability and operational status of the plurality of parking areas and the one or more mobile remote-controlled battery charging devices. This seamless data exchange ensures an efficient decision-making and enhances overall usability of the charging system. It will be appreciated that the dynamic updating of the data storage enables the user device to provide real-time insights, thereby reducing delays and facilitating an optimized charging experience. A technical effect of the aforementioned feature is that retrieving information from the data storage ensures that the user device has access to an accurate and up-to-date details about the plurality of parking areas and the one or more mobile remote-controlled battery charging devices, thereby enabling efficient decision-making and optimizing the charging process.

Throughout the present disclosure, the term *"first input"* refers to an initial command received at the user device, indicative of a user action or an instruction. The first input may be generated through various interaction mechanisms, for example, such as a tap, a click, a swipe, a voice command, gesture, or similar, on the interactive user interface of the user device. The first input is processed to determine the user's selection, i.e., the selection of the given mobile remote-controlled battery charging device associated with the given parking area.

Herein, the first input is detected at the user device through the interactive user interface rendered on the display of the user device. In this regard, such an interactive user interface presents a list or a graphical representation of available mobile remote-controlled battery charging devices and their associated parking areas, thereby enabling the user to make a selection. The detection occurs when the user interacts with the interactive user interface, for example, by tapping, clicking, or selecting a specific option corresponding to the given mobile remote-controlled battery charging device and its associated parking area. Once the first input is detected, the user device interprets this input as the selection of the given mobile remote-controlled battery charging device. Subsequently, the user device communicates this selection to the given control unit responsible for managing the given mobile remote-controlled battery charging device. The given control unit then takes control of the given mobile remote-controlled battery charging device, coordinating its navigation and operation to ensure that it is positioned appropriately and prepared for charging the battery of the vehicle. This coordination may involve transmitting commands to the given mobile remote-controlled battery charging device for movement, setup, and initiating the charging process, based on specific parameters and requirements associated with the vehicle's battery.

Optionally, the given mobile remote-controlled battery charging device is implemented as at least one of: an alternating current (AC)-based mobile remote-controlled battery charging device, a direct current (DC)-based mobile remote-controlled battery charging device. In this regard, the given mobile remote-controlled battery charging device may be equipped with necessary hardware and software to function as either the alternating current (AC)-based mobile remote-controlled battery charging device or the direct current (DC)-based mobile remote-controlled battery charging device. The selection of the AC or the DC implementation may depend on specifications of the vehicle, the user's preferences, the charging requirements identified during an interaction between the user device and the given control unit, or similar. Optionally, when the AC-based mobile remote-controlled battery charging device is implemented, the charging process involves delivering AC to the battery of the vehicle, with an onboard charger converting AC to DC for storage in the battery. It will be appreciated that such an implementation leverages the onboard charging infrastructure of the vehicle, reducing the complexity and cost of the given mobile remote-controlled battery charging device while ensuring compatibility with vehicles designed for the AC-based charging. Optionally, when the DC-based mobile remote-controlled battery charging device is implemented, the charging device itself includes components that converts AC from an external power source into DC. This DC is then delivered directly to the vehicle's battery for charging. It will be appreciated that such an implementation eliminates the need for the vehicle's onboard charger, enabling faster and more efficient charging by directly supplying the DC to the battery, which is particularly advantageous for high-power charging scenarios. A technical effect of the aforementioned feature is that it provides flexibility in selecting the at least one of: the AC-based mobile remote-controlled battery charging device, the DC-based mobile remote-controlled battery charging device, thereby enabling an efficient charging based on specific requirements of the vehicle, and enhancing an overall performance and adaptability of the charging process.

Optionally, the given mobile remote-controlled battery charging device is compatible with the battery of the vehicle. Optionally, the given mobile remote-controlled battery charging device is considered to be compatible with the battery of the vehicle when the following criteria are true: when a connector of the given mobile remote-controlled battery charging device is compatible with a charging port of the battery, when both the given mobile remote-controlled battery charging device and the battery support a same charging protocol, and when the given mobile remote-controlled battery charging device is capable of supplying a prescribed power that the battery is designed to accept. It will be appreciated that ensuring compatibility between the given mobile remote-controlled battery charging device and the battery of the vehicle enhances safety and reliability of the charging process by preventing mismatches in connector types, protocols, power levels, or similar. It will also be appreciated that such compatibility facilitates seamless integration across various models of the vehicle and charging standards, thereby offering broader usability and reducing need for additional adapters or specialized hardware. A technical effect of the given mobile remote-controlled battery charging device being compatible with the battery of the vehicle is that it ensures an efficient and reliable charging by aligning connector interfaces, charging protocols, and power delivery capabilities, thereby supporting a safe operation and an optimal performance across diverse configurations of the vehicle.

Throughout the present disclosure, the term *"communication link"* refers to a connection established between two or more devices, facilitating an exchange of a data or an instruction. Herein, the first communication link represents a digital or an analog connection established between the user device and the given control unit for transmitting information, commands, responses, or similar. The first communication link is established by the user device using a communication protocol, for example, such as wireless fidelity (Wi-Fi), Bluetooth, cellular networks, or similar, to connect to the given control unit. The process begins when the first input (indicating the user's selection) is detected. The user device identifies the given control unit and initiates a connection request. Upon authentication and validation, the first communication link is established, allowing the user device to send data and receive responses from the given control unit. Establishing the first communication link allows the user to monitor how a control system is controlling the given mobile remote-controlled battery charging device.

Once the first communication link is established and the given control unit is aware of the user's selection of the given mobile remote-controlled battery charging device, the given control unit initiates a process to establish the second communication link. Establishing the second communication link enables the control system to control the given mobile remote-controlled battery charging device. In other words, such a communication link facilitates a precise control of the given mobile remote-controlled battery charging device, ensuring that the given mobile remote-controlled battery charging device which is being selected by the user is properly positioned and activated, allowing for effective power transfer and optimized charging performance. It will be appreciated that the first communication link and the second communication link could be established via a same communication network or via different communication networks.

Optionally, the given control unit is a part of an automated valet parking system (AVPS). In this regard, the term *"automated valet parking system"* refers to a technology-driven framework designed to automate a process of parking and retrieving vehicles within a designated parking area. The automated valet parking system (AVPS) encompasses a network of interconnected components, including sensors, control units, communication links, and navigation mechanisms, to facilitate an efficient movement and management of vehicles and related infrastructure, such as the one or mobile remote-controlled battery charging devices. The AVPS operates by identifying available parking areas, guiding the vehicle autonomously to an allocated space, and managing processes like charging the battery of said vehicle through integration with the given control unit and the given mobile remote-controlled battery charging device. The AVPS enables seamless communication between the user device, the given control unit, and the vehicle, supporting an efficient and automated parking workflows.

Herein, the given control unit is configured to interact with other components of the AVPS, such as parking area sensors, vehicle navigation systems, and charging infrastructure. The AVPS identifies parking slots and manages movement of the vehicle into these slots. Simultaneously, the given control unit coordinates with the given mobile remote-controlled battery charging device to ensure that said device is available and ready to charge the battery of the vehicle once parked. A technical effect of the given control unit being a part of the AVPS is that it enables seamless integration of parking and charging operations, resulting in a unified and an automated user experience. This integration reduces human intervention, minimizes errors, and optimizes resource utilization, thereby enhancing an overall efficiency of parking and charging processes.

Throughout the present disclosure, the term *"tracking data"* refers to an information collected by the plurality of sensors that provides positional and movement information pertaining to at least objects, the vehicle, the one or more mobile remote-controlled battery charging devices, and the like, within the real-world environment. The tracking data may include, but are not limited to, a real-time location of the vehicle, a velocity of the vehicle, an acceleration of the vehicle, a trajectory of the vehicle, location of the mobile remote-controlled battery charging devices, parking areas, and other dynamic elements, such as obstacles, moving objects, environmental features, and similar. The tracking data is essential for creating an accurate digital twin of the real-world environment, enabling the given control unit to process and analyse information for an accurate navigation, positioning, and interaction of the one or more mobile remote-controlled battery charging devices within the real-world environment. The term *"digital twin"* refers to a dynamic, virtual representation of the real-world environment, which is continuously updated with real-time data collected from the plurality of sensors. Herein, the digital twin provides real-time spatial information of a plurality of objects present in the real-world environment. It is to be understood that the digital twin is a digital map of the real-world environment. Such a digital map could be in a form of three-dimensional (3D) model of the real-world environment.

Herein, the plurality of sensors are arranged in a manner that an entirety of the real-world environment is covered, thereby ensuring a continuous detection and/or tracking of the plurality of objects present in the real-world environment. Examples of the plurality of sensors may include, but are not limited to, light detection and ranging (LiDAR) sensors, radar sensors, ultrasonic sensors, inertial measurement unit sensors, and optical sensors. Optionally, the plurality of sensors are installed in an infrastructure within the real-world environment for example such as walls, ceilings, boundaries, and similar. Optionally, one or more scaffolding structures are used for mounting the plurality of sensors at sufficient height in outdoor, when there is no suitable equipment or place within the real-world environment for deploying. Optionally, layout (such as height, placement, and overall number) of the plurality of sensors is dependent on multiple factors such as area size, controlled vehicle size, other moving object size, minimum detectable object size requirement, redundancy requirements, or similar.

Herein, the tracking data collected by the plurality of sensors is communicated to the given control unit via established communication links for further processing. Based on the tracking data as given by the plurality of sensors, the given control unit creates the digital twin of the real-world environment, which is a virtual representation of the real-world environment. The digital twin comprises one or more 3D models of a layout of the real-world environment, such as geometry of roads, intersections, parking areas, buildings, and similar. Using the digital twin, the given control unit identifies the current location of the given mobile remote-controlled battery charging device in the real-world environment and the location of the given parking area. In this regard, the digital twin and the location data enables the given control unit to plan a path for navigating the given mobile remote-controlled battery charging device from its current location to the given parking area, thereby avoiding obstacles and optimizing the route. This comprehensive approach ensures that the digital twin and positional information are determined accurately and efficiently, enabling reliable operations within the AVPS. It will be appreciated that processing the tracking data collected by the plurality of sensors ensures real-time updates, allowing the given control unit to adapt to dynamic changes in the real-world environment, (such as moving obstacles, traffic flow, or similar) thereby enhancing operational reliability. It will also be appreciated that creation of the digital twin of the real-world environment provides a highly accurate virtual representation, enabling precise localization of the given mobile remote-controlled battery charging device and its navigation within the real-world environment. Furthermore, it will be appreciated that the use of the digital twin streamlines a path planning process by offering a detailed understanding of the spatial layout, enabling an optimal route calculation to the given parking area and minimizing travel time and energy consumption.

Optionally, the plurality of sensors comprise at least Light Detection and Ranging (LiDAR) sensors. In this regard, the LiDAR sensor detects spatial information from the real-world environment. Notably, the term *"spatial information"* refers to an information about a location and an orientation of the vehicle, the one or more mobile remote-controlled battery charging devices, as well as any object in a physical space. The LiDAR sensors can detect the one or more mobile remote-controlled battery charging devices, vehicles, a static object (for example, such as a pathway, a barrier, a traffic cone, a parked vehicle and similar), a dynamic object (for example, such as a pedestrian, a moving object, other vehicle, and similar), and parking areas including boundaries and available spots. In this regard, the data captured by the LiDAR sensor is processed and based on said data, one or more 3D models of the real-world environment are generated by capturing the spatial information of the vehicle, the one or more mobile remote-controlled battery charging devices, and any object with high resolution. This capability not only allows the system to map a static object but also allows to detect, classify, and track a dynamic object. The LiDAR sensor enables the system to perceive the real-world environment in real-time by managing multiple LiDAR sensors and processing a generated point cloud data, which is being captured by the LiDAR sensor. This data is then transformed, filtered, and cleared from background noise. The remaining points are grouped into clusters representing individual objects. In this regard, each object is tracked using a generic Kalman filter state estimator, which predicts and updates position and motion of said objects over time. Notably, at least two LiDAR sensors detect all the objects in the real-world environment. This capability enables effective real-time tracking, obstacle avoidance, and path planning for the given mobile remote-controlled battery charging device within an automated system such as the AVPS. The principle of operation of LiDAR sensors are well-known in the art. Herein, the one or more mobile remote-controlled battery charging devices do not include LiDAR sensors as part of their hardware. It will be appreciated that by utilizing the at least LiDAR sensors to detect spatial information in the real-world environment, the method enables precise mapping of locations and orientations of the vehicle, the one or more mobile remote-controlled battery charging devices, and surrounding objects, enhancing an accuracy and efficiency of the charging process. A technical effect of utilizing the at least LiDAR sensors is that it captures high-resolution spatial information, facilitating an accurate detection, classification, and tracking of objects in the real-world environment.

Throughout the present disclosure, the term *"routing information"* refers to an information and/or instructions generated by the at least one control unit to define an accurate route or a trajectory for the one or more mobile remote-controlled battery charging devices to follow within the real-world environment. The routing information may include details, but are not limited to, such as specific path to follow, directions, waypoints, speed limits, adjustments required to avoid obstacles, and hazardous conditions. The routing information also comprises the real-time data from the plurality of sensors, providing continuous updates to adapt to shifting conditions within the real-world environment. Herein, the routing information is determined by processing the digital twin of the real-world environment in conjunction with the information pertaining to the current location of the given mobile remote-controlled battery charging device and the location of the given parking area. The digital twin provides a detailed virtual representation of the real-world environment, including a geometry of roads, pathways, parking areas, and other relevant spatial features. Using this representation, the control unit is configured to determine an accurate route by analysing various factors such as distance, potential obstacles, dynamic objects, environmental constraints, and similar. This process could involve path planning algorithms that compute a safe and an efficient trajectory for the given mobile remote-controlled battery charging device to reach a target location, thereby ensuring real-time adaptability to changes in the real-world environment. It will be appreciated that determining the routing information facilitates real-time optimization of routes, thereby reducing a travel time and minimizing an energy consumption for the given mobile remote-controlled battery charging device. It will also be appreciated that this approach supports seamless coordination among multiple devices within the real-world environment, enabling an efficient use of resources and improving overall performance of the charging process.

Notably, once the routing information is determined, the given control unit navigates the given mobile remote-controlled battery charging device from its current location to the location of the given parking area by processing said information. The routing information is based on data such as a layout of the real-world environment, including obstacles, pathways, and dynamic conditions. In this regard, the given control unit continuously analyses feedback from the plurality of sensor to determine a current position of the given mobile remote-controlled battery charging device and adjust its trajectory accordingly. Using this real-time information, the given control unit ensures that the given mobile remote-controlled battery charging device follows an optimal path (i.e., a route followed by the given mobile remote-controlled battery charging device which is safe, an efficient and effective), thereby making adjustments as needed to avoid obstacles or accommodate environmental changes. Moreover, when the given mobile remote-controlled battery charging device is at the location of the given parking area, the charging of the battery of the vehicle may be performed using mechanical or robotic arms integrated into said device. Optionally, charging of the vehicle is done manually by the user of the vehicle at the given parking area.

Optionally, the routing information comprises at least one navigation command to be provided to the given mobile remote-controlled battery charging device, for navigating the given mobile remote-controlled battery charging device from its current location to the location of the given parking area. In this regard, the term *"navigation command"* refers to an instruction or set of instructions generated by the given control unit, intended to guide a movement and an operation of the given mobile remote-controlled battery charging device within the real-world environment. The at least one navigation command specifies actionable details for example, such as direction of movement (like forward, backward, left, and right), speed adjustments, turning angles, stopping points, or any other maneuvering actions required to navigate the given mobile remote-controlled battery charging device along the optimal route.

For example, in an automated valet parking system (AVPS), a given mobile remote-controlled battery charging device may be assigned a task (i.e., a user selects the given mobile remote-controlled battery charging device for charging a vehicle) to navigate from its current location to the location of the parking area, where the battery of the vehicle may be charged. Upon receiving the routing information, the given control unit may generate at least one command, which may be provided to the given mobile remote-controlled battery charging device. In this regard, the at least one command may include instruction such as *"turn left at an intersection",* followed by *"proceed straight for 10 meters",* and then *"turn right towards the given parking area".* These commands are continuously updated in real-time to accommodate changes in the real-world environment, such as dynamic obstacles or varying traffic conditions. Such navigation commands may be then provided to the given mobile remote-controlled battery charging device, guiding it through the facility. As the given mobile remote-controlled battery charging device moves, its position may be continually monitored using feedback from the plurality of sensors, which informs the given control unit of its current location. Herein, if any deviations from the optimal path may be detected, the routing information is adjusted, and new navigation commands may be sent to the given mobile remote-controlled battery charging device to re-align its trajectory, ensuring that said device reaches the parking area safely and efficiently.

A technical effect of the aforementioned feature is that it enables precise and adaptive navigation of the given mobile remote-controlled battery charging device, ensuring an efficient routing and seamless operation within the real-world environment.

Optionally, the given mobile remote-controlled battery charging device comprises at least one battery pack, wherein the method further comprises:
obtaining information pertaining to a state of charge of the at least one battery pack;
detecting when the state of charge of the at least one battery pack is below a first predetermined threshold value of a state of charge;
when it is detected the state of charge of the at least one battery pack is below the first predetermined threshold value of the state of charge,
   navigating the given mobile remote-controlled battery charging device to a predefined battery replacement location in the real-world environment, before navigating the given mobile remote-controlled battery charging device to the location of the given parking area, based on updated routing information;
   replacing the at least one battery pack in the given mobile remote-controlled battery charging device with at least one new battery pack at the predefined battery replacement location, wherein a state of charge of the at least one new battery pack is above a second predetermined threshold value of the state of charge, the second predetermined threshold value being higher than the first threshold value; and
   navigating the given mobile remote-controlled battery charging device from the predefined battery replacement location to the location of the given parking area, based on the updated routing information.

In this regard, the term *"battery pack"* refers to a power source that is to be used for charging the battery of the vehicle. The battery pack comprises of one or more rechargeable batteries that stores an electrical energy and provides necessary power for charging the battery of the vehicle. The phrase *"state of charge"* of a given battery pack refers to a level of electric charge of the given battery pack with respect to a capacity of the given battery pack. Typically, a value of the state of charge of the given battery pack lies in a range of 0 percent to 100 percent. In this regard, when the value of the state of charge is 0 percent or near 0 percent (for example, lying in a range of 0 percent to 10 percent), the given battery pack is said to be completely discharged, whereas when the value of the state of charge is 100 percent, the given battery pack is said to be completely charged. The term *"predefined battery replacement location"* refers to a designated location within the real-world environment where the one or more mobile remote-controlled battery charging devices are intended to navigate for a purpose of replacing their depleted battery packs (i.e., discharged battery pack, or near discharged battery pack) with the at least one new battery pack (i.e., full charged battery pack, or near-full charged battery pack).

Information about the state of charge of the at least one battery pack in the one or more mobile remote-controlled battery charging devices may be done through continuous monitoring of a charge level of the at least one battery pack, which is typically provided by sensors or monitoring systems integrated within the one or more mobile remote-controlled battery charging devices. Once this data is obtained, the given control unit detects whether the state of charge falls below the first predetermined threshold (namely, when the at least one battery pack can be considered to be discharged or near-discharged). Optionally, the first predetermined threshold value lies in a range of 5 percent to 15 percent. In this regard, when it is detected that the state of charge of the at least one battery pack falls below the first predetermined threshold, the given control unit navigates the given mobile remote-controlled battery charging device to the predefined battery replacement location. It will be appreciated that when replacing, a battery pack compartment in the given mobile remote-controlled battery charging device is accessed, and the depleted battery pack is removed using mechanical or robotic arms designed for precision handling. Herein, the at least one new battery pack has a state of charge above the second predetermined threshold (namely, when the at least one battery pack can be considered to be fully-charged or near-fully-discharged). Optionally, the second predetermined threshold value lies in a range of 30 percent to 80 percent. After the battery replacement, the given mobile remote-controlled charging device is then navigated to the location of the given parking area where the charging process of the battery of the vehicle will take place. It will also be appreciated that the ability to replace the battery pack at the predefined battery replacement location ensures that the given mobile remote-controlled battery charging device is always sufficiently powered to reach the given parking area, thereby facilitating a smooth and reliable charging operation without a need for manual intervention or an additional power sources.

A technical effect of the aforementioned feature is that it ensures that the one or more mobile remote-controlled battery charging devices can perform their task efficiently and continuously, without being hindered by insufficient battery power.

Optionally, the method further comprises determining updated routing information, based on information pertaining to the predefined battery replacement location, the digital twin of the real-world environment, and the information pertaining to the current location of the given mobile remote-controlled battery charging device and the location of the given parking area.

In this regard, the given control unit determines the updated routing information by first acquiring information about the predefined battery replacement location, the digital twin of the real-world environment, the current location of the given mobile remote-controlled battery charging device, and the location of the parking area. Using the digital twin, which is a virtual representation of the real-world environment that includes static features (such as predefined paths) and dynamic data (such as obstacles and traffic), the given control unit analyses spatial relationships between these locations. The given control unit then employs routing algorithms to calculate an optimal path that ensures efficient navigation. In this regard, the updated routing information accounts for factors for example, such as shortest distance, energy efficiency, and real-time environmental conditions to navigate the given mobile remote-controlled battery charging device first to the predefined battery replacement location for battery replacement and subsequently to the given parking area for its intended charging operation. Optionally, the updated routing information comprises at least one navigation command to be provided to the given mobile remote-controlled battery charging device, in order to navigate it to at least the predefined battery replacement location and to the location of the given parking area. It will be appreciated that the use of the digital twin of the real-world environment enables the given control unit to determine the updated routing information with high precision, accounting for both static and dynamic factors such as predefined paths, obstacles, and real-time traffic conditions. This ensures that the given mobile remote-controlled battery charging device can navigate efficiently and reliably, reducing delays and optimizing resource utilization. It will also be appreciated that an inclusion of factors such as the shortest distance and energy efficiency in the routing algorithms enhances an operational sustainability of the given mobile remote-controlled battery charging device, minimizing energy consumption while ensuring timely replacement of the at least one battery pack and charging operations.

A technical effect of determining the updated routing Information based on the aforesaid features is that it optimizes the navigation of the given mobile remote-controlled battery charging device, ensuring an efficient route planning that adapts to real-time environmental conditions and operational requirements, such as replacement of the at least one battery pack and reaching the given parking area.

The present disclosure also relates to the system as described above. Various embodiments and variants disclosed above, with respect to the aforementioned first aspect (namely, the aforementioned method), apply *mutatis mutandis* to the system.

Optionally, the system further comprises at least one operator unit communicably coupled to the at least one control unit, wherein an operator of the at least one operator unit is provided with an interactive user interface, wherein the interactive user interface displays at least one of: the digital twin of the real-world environment, the routing information, the updated routing information, the current location of the given mobile remote-controlled battery charging device, the location of the given parking area, respective locations of the plurality of parking areas, a predefined battery replacement location in the real-world environment.

In this regard, the term *"operator"* refers to an individual or an entity responsible for overseeing, managing, and monitoring an operation of the system through the at least one operator unit. Herein, the at least one operator is equipped with the interactive user interface to monitor and control aspects of the system, such as vehicle routing, management of the real-world environment, mission execution, and similar. The at least one operator plays an essential role in decision-making, ensuring the system functions optimally and safely within the real-world environment. Moreover, the term *"operator unit"* refers to a centralized unit that enables the operator to interact with and control an operations of the system. The operator unit (namely, an operator backend) is responsible allowing the operator to monitor, manage, and make real-time decisions regarding the charging process of the system. The at least one operator unit facilitates communication with the at least one control unit, and provide an access to critical data, such as routing information, status updates, and real-time feedback, thereby enabling the operator to oversee and guide the execution of tasks, monitor system performance, and intervene if necessary to ensure efficient and safe operation of the system. Moreover, the term *"interactive user interface"* refers to a component of the system that enables the operator to interact with and control functionalities of the system in real-time. Specifically, the interactive user interface displays essential information such as the digital twin of the real-world environment, the real-time position of the vehicle, the routing data, the current location of the given mobile remote-controlled battery charging device, the location of the given parking area, respective locations of the plurality of parking areas, the predefined battery replacement location, and similar. The interactive user interface allows the operator to input commands, receive feedback form the at least one control unit, and make informed decisions efficiently, thereby facilitating safe and optimized operation of the system. Optionally, a device is provided with the interactive user interface for enabling the user to at least view said information. Such an interactive user interface can be rendered on a display of the device.

Herein, the at least one control unit processes the routing and operational information regarding the given mobile remote-controlled battery charging device, the given parking area, the predefined battery replacement location in the real-world environment, and similar. This data is communicated to the at least one operator unit, which comprises the interactive user interface designed for easy interaction. In this regard, the operator can use this interface to monitor or manually adjust the route and respond to any operational issues that may arise during the charging operation. It will be appreciated that such an interface allows the operator to make informed decisions, monitor performance of the given the mobile remote-controlled battery charging device, and similar, ensuring an efficient and safe operation of the given mobile remote-controlled battery charging device. It will also be appreciated that the ability to display critical data, such as the digital twin of the real-world environment, the updated routing information, and similar, allows the operator to quickly respond to dynamic conditions and optimize the charging process, thereby improving an overall reliability of the system. Furthermore, it will be appreciated that the interactive user interface facilitates seamless communication between the operator and the at least one control unit, enabling swift interventions, when necessary, thereby minimizing downtime and enhancing operational efficiency.

A technical effect of the aforementioned feature is that it enhances the ability of the operator to monitor and control the system in real-time, facilitating an efficient decision-making and enabling timely interventions to optimize the operation of the given mobile remote-controlled battery charging device. This contributes to a smooth and reliable charging of the battery of the vehicle, ensuring an uninterrupted operation and optimal performance throughout the charging process.

Optionally, the given mobile remote-controlled battery charging device comprises at least one battery pack, wherein the given control unit is further configured to:
obtain information pertaining to a state of charge of the at least one battery pack;
detect when the state of charge of the at least one battery pack is below a first predetermined threshold value of a state of charge;
when it is detected the state of charge of the at least one battery pack is below the predetermined threshold value of the state of charge,
   navigate the given mobile remote-controlled battery charging device to a predefined battery replacement location in the real-world environment, before navigating the given mobile remote-controlled battery charging device to the location of the given parking area, based on updated routing information;
   replace the at least one battery pack in the given mobile remote-controlled battery charging device with at least one new battery pack at the predefined battery replacement location, wherein a state of charge of the at least one new battery pack is above a second predetermined threshold value of the state of charge, the second predetermined threshold value being higher than the first threshold value; and
   navigate the given mobile remote-controlled battery charging device from the predefined battery replacement location to the location of the given parking area, based on the updated routing information.

Optionally, the given control unit is further configured to determine updated routing information, based on information pertaining to the predefined battery replacement location, the digital twin of the real-world environment, and the information pertaining to the current location of the given mobile remote-controlled battery charging device and the location of the given parking area.

Optionally, the given mobile remote-controlled battery charging device is implemented as at least one of: an alternating current (AC)-based mobile remote-controlled battery charging device, a direct current (DC)-based mobile remote-controlled battery charging device.

Optionally, the user device receives the information pertaining to the plurality of parking areas and the one or more mobile remote-controlled battery charging devices, from a data storage.

### DETAILED DESCRIPTION OF THE DRAWINGS

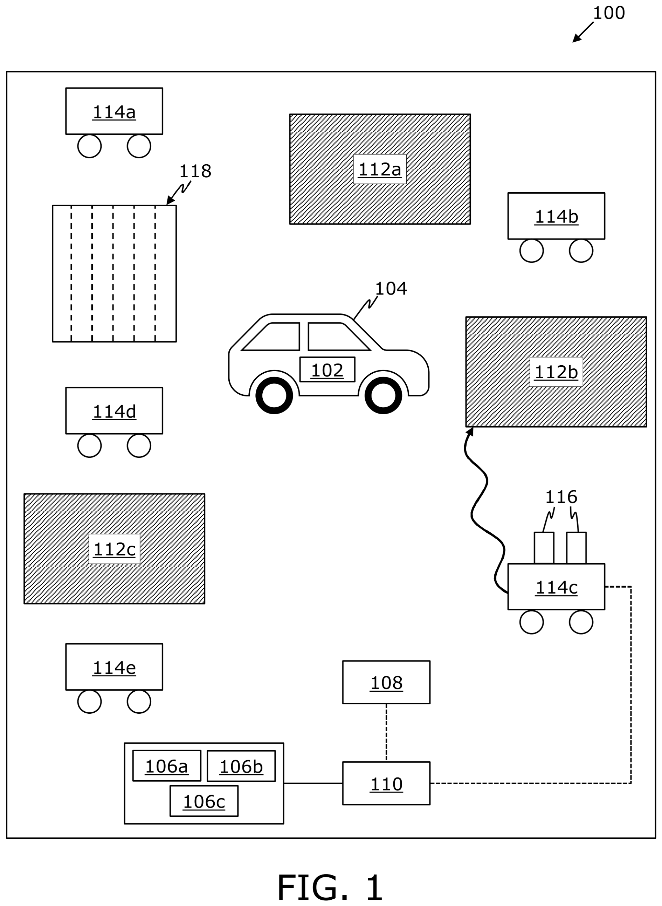

Referring to FIG. 1, illustrated is a real-world environment **100** where a system for charging a battery **102** of a vehicle **104** is used, in accordance with an embodiment of the present disclosure. The system comprises a plurality of sensors (for example, depicted as **106a, 106b,** and **106c),** a user device **108,** and at least one control unit. Herein, the at least one control unit comprises a given control unit **110.** Herein, the plurality of sensors **106a-c** are arranged in the real-world environment **100** in which the vehicle **104** is present. The user device **108** is configured to receive information pertaining to a plurality of parking areas (depicted as parking areas **112a, 112b,** and **112c)** present in the real-world environment **100** and one or more mobile remote-controlled battery charging devices (for example, depicted as a mobile remote-controlled battery charging device **114a,** a mobile remote-controlled battery charging device **114b,** a mobile remote-controlled battery charging device **114c,** a mobile remote-controlled battery charging device **114d,** and a mobile remote-controlled battery charging device **114e).** Herein, mobile remote-controlled battery charging devices **114a** and **114b** are associated with a parking area **112a,** the mobile remote-controlled battery charging device **114c** is associated with a parking area **112b,** and mobile remote-controlled battery charging devices **114d** and **114e** are associated with a parking area **112c.** The mobile remote-controlled battery charging devices **114a-e** are available to be employed for charging the battery **102** of the vehicle **104,** and are controlled using the given control unit **110.** Herein, the user device **108** detects a first input indicative of a selection of a given mobile remote-controlled battery charging device (for example, for the sake of clarity, depicted as **114c)** associated with a given parking area (for example, for the sake of clarity depicted as **112b),** wherein the given mobile remote-controlled battery charging device **114c** is selected to be employed for charging the battery **102** of the vehicle **104,** and is to be controlled by the given control unit **110.**

Herein, the user device **108** establishes a first communication link (for the sake of clarity, shown using a dotted line) with the given control unit **110,** based on the first input, and the given control unit **110** is configured to establish a second communication link (for the sake of clarity, shown using a dotted line) with the given mobile remote-controlled battery charging device **114c.** In this regard, the given control unit **110** process tracking data collected by the plurality of sensors **106a-c** to determine a digital twin of the real-world environment **100** and information pertaining to a current location of the given mobile remote-controlled battery charging device **114c** in the real-world environment **100** and a location of the given parking area **112b** where the given mobile remote-controlled battery charging device **114c** is to be navigated. Further, the given control unit **110** determines routing information, based on the digital twin of the real-world environment **100** and the information pertaining to the current location of the given mobile remote-controlled battery charging device **114c** and the location of the given parking area **112b.** Then, the given control unit **110** navigates (as shown by a solid line with an arrow) the given mobile remote-controlled battery charging device **114c** from its current location to the location of the given parking area **112b,** based on the routing information.

Optionally, the given mobile remote-controlled battery charging device **114c** comprises at least one battery pack (depicted as a battery pack **116).** Optionally, there is shown a predefined battery replacement location **118** in the real-world environment **100,** where the battery pack **116** is replaced with at least one new battery pack.

FIG. 1 is merely an example, which should not unduly limit the scope of the claims herein. A person skilled in the art will recognize many variations, alternatives, and modifications of embodiments of the present disclosure.

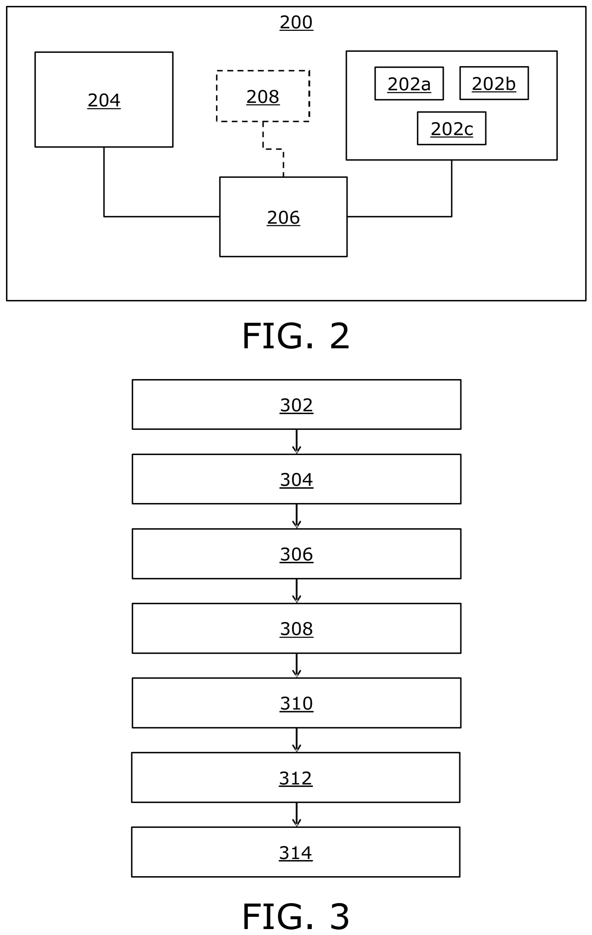

Referring to FIG. 2, illustrated is a block diagram of an architecture of a system **200** for charging a battery of a vehicle, in accordance with an embodiment of the present disclosure. Herein, the system **200** comprises a plurality of sensors (for example, depicted as sensors **202a, 202b,** and **202c),** a user device **204,** and at least one control unit (depicted as a control unit **206).** The control unit **206** is communicably coupled to the sensors **202a-c** and the user device **204.** Optionally, the system **200** further comprises at least one operator unit (for example, depicted as an operator unit **208)** communicably coupled to the control unit **206.**

It may be understood by a person skilled in the art that the FIG. 2 includes a simplified architecture of a system **200** for sake of clarity, which should not unduly limit the scope of the claims herein. The person skilled in the art will recognize many variations, alternatives, and modifications of embodiments of the present disclosure.

Referring to FIG. 3, illustrated are steps of a method for charging a battery of a vehicle, in accordance with an embodiment of the present disclosure. At step **302,** information pertaining to a plurality of parking areas and one or more mobile remote-controlled battery charging devices is received at a user device, the plurality of parking areas being present in a real-world environment and the one or more mobile remote-controlled battery charging devices being associated with each of the plurality of parking areas, wherein the one or more mobile remote-controlled battery charging devices are available to be employed for charging the battery of the vehicle, and are controlled using at least one control unit. At step **304,** a first input is detected at the user device, the first input being indicative of a selection of a given mobile remote-controlled battery charging device associated with a given parking area, wherein the given mobile remote-controlled battery charging device is selected to be employed for charging the battery of the vehicle, and is to be controlled by a given control unit. At step **306,** a first communication link is established between the user device and the given control unit, using the user device, based on the first input. At step **308,** a second communication link is established between the given control unit and the given mobile remote-controlled battery charging device, using the given control unit. At step **310,** tracking data collected by a plurality of sensors is processed at the given control unit, to determine a digital twin of the real-world environment and information pertaining to a current location of the given mobile remote-controlled battery charging device in the real-world environment and a location of the given parking area where the given mobile remote-controlled battery charging device is to be navigated. At step **312,** routing information is determined, based on the digital twin of the real-world environment and the information pertaining to the current location of the given mobile remote-controlled battery charging device and the location of the given parking area. At step **314,** using the given control unit, the given mobile remote-controlled battery charging device is navigated from its current location to the location of the given parking area, based on the routing information.

The aforementioned steps are only illustrative and other alternatives can also be provided where one or more steps are added, one or more steps are removed, or one or more steps are provided in a different sequence without departing from the scope of the claims herein.

## Claims

1. A method for charging a battery (102) of a vehicle (104), wherein the method comprises:
receiving, at a user device (108, 204), information pertaining to a plurality of parking areas (112a-c) present in a real-world environment (100) and one or more mobile remote-controlled battery charging devices associated (114a-e) with each of the plurality of parking areas, wherein the one or more mobile remote-controlled battery charging devices are available to be employed for charging the battery of the vehicle, and are controlled using at least one control unit;
detecting, at the user device, a first input indicative of a selection of a given mobile remote-controlled battery charging device (114c) associated with a given parking area (112b), wherein the given mobile remote-controlled battery charging device is selected to be employed for charging the battery of the vehicle, and is to be controlled by a given control unit (110);
establishing, using the user device, a first communication link between the user device and the given control unit, based on the first input;
establishing, using the given control unit, a second communication link between the given control unit and the given mobile remote-controlled battery charging device;
processing, at the given control unit, tracking data collected by a plurality of sensors (106a-c, 202a-c), to determine a digital twin of the real-world environment and information pertaining to a current location of the given mobile remote-controlled battery charging device in the real-world environment and a location of the given parking area where the given mobile remote-controlled battery charging device is to be navigated;
determining routing information, based on the digital twin of the real-world environment and the information pertaining to the current location of the given mobile remote-controlled battery charging device and the location of the given parking area; and
navigating, using the given control unit, the given mobile remote-controlled battery charging device from its current location to the location of the given parking area, based on the routing information.

2. The method of claim 1, wherein the given mobile remote-controlled battery charging device (114c) comprises at least one battery pack (116), wherein the method further comprises:
obtaining information pertaining to a state of charge of the at least one battery pack;
detecting when the state of charge of the at least one battery pack is below a first predetermined threshold value of a state of charge;
when it is detected the state of charge of the at least one battery pack is below the predetermined threshold value of the state of charge,
navigating the given mobile remote-controlled battery charging device to a predefined battery replacement location (118) in the real-world environment (100), before navigating the given mobile remote-controlled battery charging device to the location of the given parking area (112b), based on updated routing information;
replacing the at least one battery pack in the given mobile remote-controlled battery charging device with at least one new battery pack at the predefined battery replacement location, wherein a state of charge of the at least one new battery pack is above a second predetermined threshold value of the state of charge, the second predetermined threshold value being higher than the first threshold value; and
navigating the given mobile remote-controlled battery charging device from the predefined battery replacement location to the location of the given parking area, based on the updated routing information.

3. The method of claim 2, wherein the method further comprises determining updated routing information, based on information pertaining to the predefined battery replacement location (118), the digital twin of the real-world environment (100), and the information pertaining to the current location of the given mobile remote-controlled battery charging device (114c) and the location of the given parking area (112b).

4. The method of any of the preceding claims, wherein the given mobile remote-controlled battery charging device (114c) is implemented as at least one of: an alternating current (AC)-based mobile remote-controlled battery charging device, a direct current (DC)-based mobile remote-controlled battery charging device.

5. The method of any of the preceding claims, wherein the information pertaining to the plurality of parking areas (112a-c) and the one or more mobile remote-controlled battery charging devices (114a-e) is received, at the user device (108, 204), from a data storage.

6. The method of any of the preceding claims, wherein the given mobile remote-controlled battery charging device (114c) is compatible with the battery (102) of the vehicle (104).

7. The method of any of the preceding claims, the routing information comprises at least one navigation command to be provided to the given mobile remote-controlled battery charging device (114c), for navigating the given mobile remote-controlled battery charging device from its current location to the location of the given parking area (112b).

8. The method of any of the preceding claims, wherein the plurality of sensors (106a-c, 202a-c) comprise at least Light Detection and Ranging (LiDAR) sensors.

9. The method of any of the preceding claims, wherein the given control unit (110) is a part of an automated valet parking system (AVPS).

10. A system (200) for charging a battery (102) of a vehicle (104), wherein the system comprises:
a plurality of sensors (106a-c, 202a-c) arranged in a real-world environment (100) in which the vehicle is present;
a user device (108, 204); and
at least one control unit (206),
wherein the user device is configured to:
receive information pertaining to a plurality of parking areas (112a-c) present in the real-world environment and one or more mobile remote-controlled battery charging devices (114a-e) associated with each of the plurality of parking areas, wherein the one or more mobile remote-controlled battery charging devices are available to be employed for charging the battery of the vehicle, and are controlled using the at least one control unit;
detect a first input indicative of a selection of a given mobile remote-controlled battery charging device (114c) associated with a given parking area (112b), wherein the given mobile remote-controlled battery charging device is selected to be employed for charging the battery of the vehicle, and is to be controlled by a given control unit (110) from amongst the at least one control unit; and
establish a first communication link with the given control unit, based on the first input, and
wherein the given control unit is configured to:
establish a second communication link with the given mobile remote-controlled battery charging device;
process tracking data collected by the plurality of sensors to determine a digital twin of the real-world environment and information pertaining to a current location of the given mobile remote-controlled battery charging device in the real-world environment and a location of the given parking area where the given mobile remote-controlled battery charging device is to be navigated;
determine routing information, based on the digital twin of the real-world environment and the information pertaining to the current location of the given mobile remote-controlled battery charging device and the location of the given parking area; and
navigate the given mobile remote-controlled battery charging device from its current location to the location of the given parking area, based on the routing information.

11. The system (200) of claim 10, further comprising at least one operator unit (208) communicably coupled to the at least one control unit (206), wherein an operator of the at least one operator unit is provided with an interactive user interface, wherein the interactive user interface displays at least one of: the digital twin of the real-world environment (100), the routing information, the updated routing information, the current location of the given mobile remote-controlled battery charging device (114c), the location of the given parking area (112b), respective locations of the plurality of parking areas (112a-c), a predefined battery replacement location (118) in the real-world environment.

12. The system (200) of claim 10 or 11, wherein the given mobile remote-controlled battery charging device (114c) comprises at least one battery pack (116), wherein the given control unit (110) is further configured to:
obtain information pertaining to a state of charge of the at least one battery pack;
detect when the state of charge of the at least one battery pack is below a first predetermined threshold value of a state of charge;
when it is detected the state of charge of the at least one battery pack is below the predetermined threshold value of the state of charge,
navigate the given mobile remote-controlled battery charging device to a predefined battery replacement location (118) in the real-world environment (100), before navigating the given mobile remote-controlled battery charging device to the location of the given parking area, based on updated routing information;
replace the at least one battery pack in the given mobile remote-controlled battery charging device with at least one new battery pack at the predefined battery replacement location, wherein a state of charge of the at least one new battery pack is above a second predetermined threshold value of the state of charge, the second predetermined threshold value being higher than the first threshold value; and
navigate the given mobile remote-controlled battery charging device from the predefined battery replacement location to the location of the given parking area (112b), based on the updated routing information.

13. The system (200) of any of claims 10-12, wherein the given control unit (110) is further configured to determine updated routing information, based on information pertaining to the predefined battery replacement location (118), the digital twin of the real-world environment (100), and the information pertaining to the current location of the given mobile remote-controlled battery charging device (114c) and the location of the given parking area (112b).

14. The system (200) of any of claims 10-13, wherein the given mobile remote-controlled battery charging device (114c) is implemented as at least one of: an alternating current (AC)-based mobile remote-controlled battery charging device, a direct current (DC)-based mobile remote-controlled battery charging device.

15. The system (200) of any of claims 10-14, wherein the user device (108, 204) receives the information pertaining to the plurality of parking areas (112a-c) and the one or more mobile remote-controlled battery charging devices (114a-e), from a data storage.
